(19)

Europäisches
Patentamt

European
Patent Office

Office européen
des brevets

(11) **EP 4 660 039 A1**

(12) **EUROPEAN PATENT APPLICATION**
published in accordance with Art. 153(4) EPC

(43) Date of publication:
**10.12.2025 Bulletin 2025/50**

(21) Application number: **23942170.4**

(22) Date of filing: **04.12.2023**

(51) International Patent Classification (IPC):
**B60W 40/076** $^{(2012.01)}$

(52) Cooperative Patent Classification (CPC):
Y02T 10/72

(86) International application number:
**PCT/CN2023/136058**

(87) International publication number:
**WO 2024/259904 (26.12.2024 Gazette 2024/52)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **19.06.2023 CN 202310723662**

(71) Applicant: **Beijing Jingwei Hirain Technologies
Co., Inc.
Beijing 100015 (CN)**

(72) Inventors:
 • LIU, Xin
  **Beijing 100015 (CN)**
 • CHEN, Xi
  **Beijing 100015 (CN)**
 • WANG, Qinghui
  **Beijing 100015 (CN)**
 • WANG, Peng
  **Beijing 100015 (CN)**

(74) Representative: **Slingsby Partners LLP
1 Kingsway
London WC2B 6AN (GB)**

(54) **TRAVELING SLOPE ESTIMATION METHOD AND APPARATUS FOR VEHICLE, AND DEVICE,
STORAGE MEDIUM AND PROGRAM**

(57)    A traveling slope estimation method and apparatus for a vehicle, and a device, a storage medium and a program. The method comprises: determining the actually measured acceleration of a vehicle on the basis of measurement data for an acceleration sensor mounted in the vehicle; determining a reference acceleration of the vehicle according to the wheel speed of the vehicle; determining vehicle body posture information of the vehicle; and according to the actually measured acceleration, the reference acceleration and the vehicle body posture information, determining a traveling slope corresponding to the vehicle, wherein the traveling slope comprises a longitudinal slope and/or a lateral slope.

Fig. 1

**Description**

**CROSS-REFERENCE TO RELATED APPLICATION**

The present disclosure claims priority to Chinese Patent Application No. 202310723662.0 filed on June 19, 2023, which is incorporated herein by reference in its entirety.

**TECHNICAL FIELD**

The present disclosure relates to the technical field of automotive electronics, and in particular, to a method, apparatus, device, storage medium, and program for estimating a vehicle driving slope.

**BACKGROUND**

With the improvement of the intelligentization of automobiles, the automobiles have assisted driving functions such as the constant speed cruise and the steep slope gradual descent. Relative to the traditional driving process, such assisted functions reduce the operation difficulty of the driver and reduce the fatigue of the driver in road conditions such as off-road and uphill. However, such functions require the controller to respond to requests for speed/acceleration on different slopes, so it is necessary to estimate the slope of the road surface on which the vehicle travels in real time as the function input. In the driving process of the vehicle, the slope of the road surface on which the vehicle travels, that is, the driving slope, is often required in the assisted driving, braking and/or vertical control of the vehicle.

**SUMMARY**

Embodiments of the present disclosure provide a method for estimating a vehicle driving slope including:

determining, based on measurement data of an acceleration sensor installed in a vehicle, a measured acceleration of the vehicle,
determining, based on a wheel speed of the vehicle, a reference acceleration of the vehicle
determining vehicle body posture information of the vehicle, where the vehicle body posture information includes a suspension reference longitudinal slope, a vehicle body pitch angle and/or a vehicle body roll angle, and
determining, based on the measured acceleration, the reference acceleration, and the vehicle body posture information, a driving slope corresponding to the vehicle, the driving slope including a longitudinal slope and/or a lateral slope.

Embodiments of the present disclosure provide an apparatus for estimating a vehicle driving slope including:

a measured acceleration determination module, configured to determine, based on measurement data of an acceleration sensor installed in a vehicle, a measured acceleration of the vehicle,
a reference acceleration determination module, configured to determine, based on a wheel speed of the vehicle, a reference acceleration of the vehicle,
a vehicle body posture determination module, configured to determine vehicle body posture information of the vehicle, where the vehicle body posture information includes a suspension reference longitudinal slope, a vehicle body pitch angle and/or a vehicle body roll angle, and
a slope determination module, configured to determine, based on the measured acceleration, the reference acceleration, and the vehicle body posture information, a driving slope corresponding to the vehicle, the driving slope including a longitudinal slope and/or a lateral slope.

Embodiments of the present disclosure provide an electronic device including a processor and a memory storing computer program instructions, where the processor, when executing the computer program instructions, implements the method for estimating the vehicle driving slope in the first aspect.
Embodiments of the present disclosure provide a computer-readable storage medium storing computer program instructions thereon, where the computer program instructions, when executed by a processor, implement the method for estimating the vehicle driving slope in the first aspect.
Embodiments of the present disclosure provide a computer program product, where instructions in the computer program product, when executed by a processor of an electronic device, cause the electronic device to execute the method for estimating the vehicle driving slope in the first aspect.

## BRIEF DESCRIPTION OF THE DRAWINGS

In order to illustrate technical solutions of embodiments of the present disclosure more clearly, the drawings required for the embodiments of the present disclosure will be briefly described. For those skilled in the art, other drawings can also be obtained from these drawings without any inventive effort.

Fig. 1 is a schematic flowchart of a method for estimating a vehicle driving slope according to an embodiment of the present disclosure;

Fig. 2 is a schematic view of a method for acquiring a measured acceleration signal according to an embodiment of the present disclosure;

Fig. 3 is a schematic flowchart of a method for determining a reference acceleration of a vehicle according to an embodiment of the present disclosure;

Fig. 4 is a schematic flowchart of a method for determining gross vehicle mass of a vehicle according to an embodiment of the present disclosure;

Fig. 5 is a schematic structural view of a system for estimating a vehicle driving slope according to an embodiment of the present disclosure;

Fig. 6 is a schematic structural view of an apparatus for estimating a vehicle driving slope according to an embodiment of the present disclosure; and

Fig. 7 is a schematic structural view of an electronic device according to an embodiment of the present disclosure.

## DETAILED DESCRIPTION

Features and exemplary embodiments of various aspects of the present disclosure will be described in detail below. In order to make the objects, technical solutions and advantages of the present disclosure clearer, the present disclosure is further described in detail below with reference to the drawings and specific embodiments. It should be understood that the specific embodiments described herein are merely intended to explain the present disclosure, rather than to limit the present disclosure. For those skilled in the art, the present disclosure may be implemented without some of these specific details. The following description of the embodiments is only to provide a better understanding of the present disclosure by illustrating examples of the present disclosure.

It should be noted that, in the present disclosure, the relational terms, such as first and second, are used merely to distinguish one entity or operation from another entity or operation, without necessarily requiring or implying any actual such relationships or orders for these entities or operations. Moreover, the terms "comprise", "include", or any other variants thereof, are intended to represent a non-exclusive inclusion, such that a process, method, article or device including a series of elements includes not only those elements, but also other elements that are not explicitly listed or elements inherent to such a process, method, article or device. Without more constraints, the elements following an expression "comprise/include..." do not exclude the existence of additional identical elements in the process, method, article or device that includes the elements.

With the improvement of the intelligentization of automobiles, the automobiles have assisted driving functions such as the constant speed cruise and the steep slope gradual descent. Relative to the traditional driving process, such assisted functions reduce the operation difficulty of the driver and reduce the fatigue of the driver in road conditions such as off-road and uphill. However, such functions require the controller to respond to requests for speed/acceleration on different slopes, so it is necessary to estimate the slope of the road surface on which the vehicle travels in real time as the function input. In the vehicle braking system, the calculation of the braking reference speed affects the wheel slip ratio, and further affects the distribution of the braking force. In order to acquire the optimal braking capability, the longitudinal slope and the lateral slope need to be input into the control chain as parameters. In the vertical control, suspension damping and suspension stiffness need to be adjusted for mid- and high-end suspension products such as semi-active/active suspension products based on the current slope of the road surface and local undulations, so as to increase the operation smoothness and the driving comfort. It may be seen that in the driving process of the vehicle, it is often necessary to estimate the slope of the road surface on which the vehicle travels, that is, the driving slope.

As may be seen from the above, in the existing process for estimating the slope of the road on which the vehicle travels, the rigid body model is mostly used for analysis. However, when the vehicle travels on a bumpy road, the vehicle body may pitch, roll and/or shake, and it is difficult to eliminate the interaction between the suspension system and the road surface and the zero point drift of the sensor by the existing method, resulting in a relatively poor estimated result.

In view of this, in order to improve the accuracy of the estimated result of the vehicle driving slope, embodiments of the present disclosure provide a method for estimating a vehicle driving slope, an apparatus for estimating the vehicle driving slope, a device, a storage medium and a program.

The method for estimating a vehicle driving slope according to embodiments of the present disclosure is first described below.

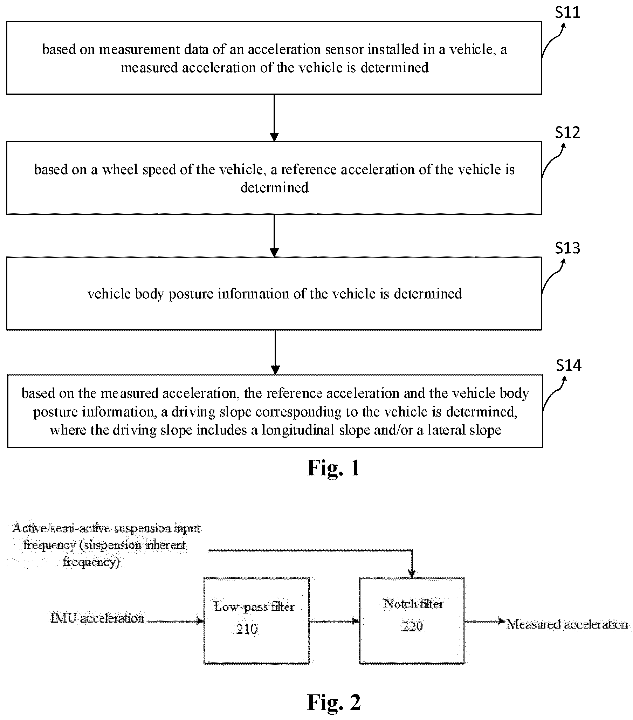

Referring to Fig. 1, Fig. 1 is a schematic flowchart of a method for estimating a vehicle driving slope according to an embodiment of the present disclosure. As shown in Fig. 1, the method for estimating a vehicle driving slope may include the following steps S11-S14.

In S11: based on measurement data of an acceleration sensor installed in a vehicle, a measured acceleration of the vehicle is determined.

Generally, the Inertial Measurement Unit (IMU) for measuring the three-axis Euler angles or the angular rate and acceleration of an object may be installed in the vehicle. The IMU mainly includes the acceleration sensor and the gyroscope sensor. Based on this, when the vehicle driving slope is estimated, the measured acceleration of the vehicle may be determined based on the measurement data of the acceleration sensor in the IMU.

In S12: based on a wheel speed of the vehicle, a reference acceleration of the vehicle is determined.

The reference acceleration of the vehicle refers to the acceleration of the vehicle calculated based on the actual driving state of the vehicle.

The reference acceleration of the vehicle is related to the speed of the vehicle, and the speed of the vehicle is often determined based on the wheel speed of the vehicle. Based on this, in the embodiments of the present disclosure, the reference acceleration of the vehicle is determined based on the wheel speed of the vehicle.

In S13: vehicle body posture information of the vehicle is determined.

The vehicle body posture information refers to information that can reflect changes in the vehicle body posture of the vehicle.

Generally, when the vehicle travels on the bumpy road, the vehicle body will undergo changes in the vehicle body posture such as shaking and rolling. These changes in the vehicle body posture may generally be divided into three types, that is, rolling, pitching, and rising. Therefore, the vehicle body posture information may be information that can reflect rolling, pitching, rising, and other changes in the vehicle body posture of the vehicle, such as the suspension reference longitudinal slope, the suspension reference lateral slope, the vehicle body pitch angle and/or the vehicle body roll angle of the vehicle. The suspension reference longitudinal slope and the vehicle body pitch angle can reflect whether the vehicle pitches or rises, and the suspension reference lateral slope and the vehicle body roll angle of the vehicle can reflect whether the vehicle rolls.

In S14: based on the measured acceleration, the reference acceleration, and the vehicle body posture information, a driving slope corresponding to the vehicle is determined, where the driving slope includes a longitudinal slope and/or a lateral slope.

In the method for estimating a vehicle driving slope according to the embodiments of the present disclosure, the measured acceleration of the vehicle is acquired, the measured acceleration of the vehicle is determined based on the measurement data of the acceleration sensor installed in the vehicle, the reference acceleration of the vehicle is determined based on the wheel speed of the vehicle, the vehicle body posture information is determined, and the driving slope corresponding to the vehicle is determined based on the measured acceleration, the reference acceleration, and the vehicle body posture information. The driving slope includes the longitudinal slope and/or the lateral slope. According to the embodiments of the present disclosure, when the driving slope is estimated, the effect of the vehicle body posture on the slope estimation is considered, so that more accurate slope estimation than the conventional solution is achieved.

In some embodiments, in the above S11, in order to improve the accuracy of the measured acceleration, the measured acceleration may be determined by the following steps of:

acquiring IMU acceleration output by an IMU in the vehicle,
performing low-pass filtering on the IMU acceleration by a low-pass filter to obtain first acceleration, and
filtering the first acceleration by a notch filter to obtain the measured acceleration of the vehicle.

The IMU acceleration output by the IMU refers to the acceleration of the vehicle measured by the acceleration sensor in the IMU.

Exemplarily, the signal processing module shown in Fig. 2 may be used for processing the IMU acceleration signal output by the IMU to obtain the measured acceleration. As shown in Fig. 2, the signal processing module may include the low-pass filter 210 and the notch filter 220. Since the changing frequency of the slope is lower than the changing frequencies of the vertical force and the longitudinal force, the 5-Hz low-pass filter 210 may perform the low-pass filtering on the IMU acceleration output by the IMU, and the effect of bumps generated by unevenness of the road surface and local potholes on the road surface may be eliminated by the low-pass filtering. After the low-pass filtering is completed, the first acceleration obtained after the low-pass filtering is filtered by the notch filter 220 to eliminate the signal noise generated by the vibration of the vehicle body. The target frequency of the notch filter 220 is the natural frequency of the vehicle suspension system. As shown in Fig. 2. For the active/semi-active suspension system, the target frequency may be input through the interface, and finally, the acceleration obtained after two filtering processes is determined as the measured acceleration.

By processing the acquired IMU acceleration, the effect of the road bumpiness and the suspension vibration may be eliminated, thereby effectively improving the accuracy of the measured acceleration.

In some embodiments, in the S12, when the reference acceleration of the vehicle is determined, wheel speeds of four wheels of the vehicle may be acquired first; next for each wheel, the vehicle speed corresponding to the wheel is determined based on the wheel speed of the wheel and the linear expression corresponding to the wheel, where the linear expression is used for characterizing the corresponding relationship between the wheel speed of the wheel and the vehicle speed; then the reference vehicle speed of the vehicle is determined based on the vehicle speeds corresponding to four wheels, and the reference acceleration of the vehicle may be obtained by differentiating the reference vehicle speed. Four wheels include the left front wheel, the right front wheel, the left rear wheel and the right rear wheel.

The wheel speeds of four wheels may be measured by the sensor.

The linear expression for the wheel speed $V_{FL}$ of the left front wheel and the vehicle speed $V_{XCOG}$ is as follows:

$$V_{FL} = \frac{1}{COS\delta}\left(V_{XCOG} - \frac{BF}{2}w_r\right)$$

The linear expression for the wheel speed $V_{FR}$ of the right front wheel and the vehicle speed $V_{XCOG}$ is as follows:

$$V_{FR} = \frac{1}{COS\delta}\left(V_{XCOG} + \frac{BF}{2}w_r\right)$$

The linear expression for the wheel speed $V_{RL}$ of the left rear wheel and the vehicle speed $V_{XCOG}$ is as follows:

$$V_{RL} = V_{XCOG} - \frac{BR}{2}w_r$$

The linear expression for the wheel speed $V_{RR}$ of the right rear wheel and the vehicle speed $V_{XCOG}$ is as follows:

$$V_{RR} = V_{XCOG} + \frac{BR}{2}w_r$$

Where $\delta$ represents the steering angle of the front wheel, $BF$ represents the tread between the left front wheel and the right front wheel, BR represents the tread between the left rear wheel and the right rear wheel, and $w_r$ represents the yaw angular velocity.

Under a condition that the wheel speeds of four wheels are known, based on the above relational expressions, the vehicle speeds corresponding to the wheels may be calculated.

Further, after the vehicle speeds corresponding to four wheels are calculated, the reference vehicle speed may be determined based on four vehicle speeds.

In order to make the determined reference vehicle speed closer to the actual vehicle speed, the reference vehicle speed is determined based on operating conditions in the embodiments of the present disclosure. The reference vehicle speed may be determined by the following steps of:

acquiring a pedal signal of the vehicle, where the pedal signal includes an accelerator pedal signal and/or a brake pedal signal,

determining, under a condition that the vehicle is determined to be in an acceleration state based on the accelerator pedal signal and the vehicle is a two-wheel drive vehicle, the third greatest vehicle speed of the vehicle speeds corresponding to the four wheels as a reference vehicle speed,

determining, under a condition that the vehicle is determined to be in an acceleration state based on the accelerator pedal signal and the vehicle is a four-wheel drive vehicle, the minimum vehicle speed of the vehicle speeds corresponding to the four wheels as the reference vehicle speed,

determining, under a condition that the vehicle is determined to be in a deceleration state based on the brake pedal signal, the maximum vehicle speed of the vehicle speeds corresponding to the four wheels as the reference vehicle speed, and

determining, under a condition that it is not determined that the vehicle is in the acceleration state based on the accelerator pedal signal and it is not determined that the vehicle is in the deceleration state based on the brake pedal signal, a weighted average of the vehicle speeds corresponding to the four wheels as the reference vehicle speed.

It may be determined whether the opening degree of the accelerator pedal is greater than the first opening degree threshold based on the accelerator pedal signal. Under a condition that it is determined that the opening degree of the accelerator pedal is greater than the first opening degree threshold, it is determined that the vehicle is in the acceleration state; otherwise it is determined that the vehicle is not in the acceleration state. Similarly, it may be determined whether the opening degree of the brake pedal is greater than the second opening degree threshold based on the brake pedal signal. Under a condition that it is determined that the opening degree of the brake pedal is greater than the second opening degree threshold, it is determined that the vehicle is in the deceleration state; otherwise it is determined that the vehicle is not in the deceleration state. The first opening degree threshold and the second opening degree threshold may be set based on actual situations. For example, the first opening degree threshold and the second opening degree threshold may be both 0.2.

By the above steps, the operating conditions of the vehicle are determined based on the pedal signal of the vehicle, and based on the characteristics of the operating conditions, different reference vehicle speeds are used for different operating conditions, ensuring that the determined reference vehicle speed is closer to the actual vehicle speed and is more accurate.

In some embodiments, the reference vehicle speed may be determined based on the vehicle speeds corresponding to four wheels by using the weighted average through the following steps of:

acquiring an active control signal of the vehicle,

determining a first weight corresponding to an active control wheel and a second weight corresponding to other wheels, wherein the active control wheel is a wheel of the four wheels that is controlled by the active control signal, the other wheels are any other wheels of the four wheels than the active control wheel, the first weight is less than the second weight, and a sum of the first weight and the second weight is 1, and

calculating the reference vehicle speed of the vehicle, based on the vehicle speeds corresponding to the four wheels, the first weight and the second weight, according to a preset formula for calculating the reference vehicle speed.

The formula for calculating the reference vehicle speed includes:

$$V_{ref} = \frac{\sum_1^4 (w_2 - Acti * (w_2 - w_1)) V_i}{\sum_1^4 (w_2 - Acti * (w_2 - w_1))}$$

where $V_{ref}$ represents the reference vehicle speed,

$w_2$ represents the second weight,

$w_1$ represents the first weight,

$V_i$ represents the vehicle speed corresponding to an i-th one of the wheels, and

$Acti$ is a flag value with a value being 0 or 1, and under a condition that the i-th one of wheels is the active control wheel, the value of $Acti$ is 1; and under a condition that the i-th one of the wheels is any one of the other wheels, the value of $Acti$ is 0.

The first weight and the second weight may be set based on actual situations. For example, the first weight may be set to 0.05, and the second weight may be set to 0.95.

For the wheel controlled by the active control signal, there is a relatively great difference between the vehicle speed corresponding to the active control wheel and the actual vehicle speed. Therefore, by setting the first weight corresponding to the active control wheel to be relatively small, the accuracy of the finally determined reference vehicle speed may be improved.

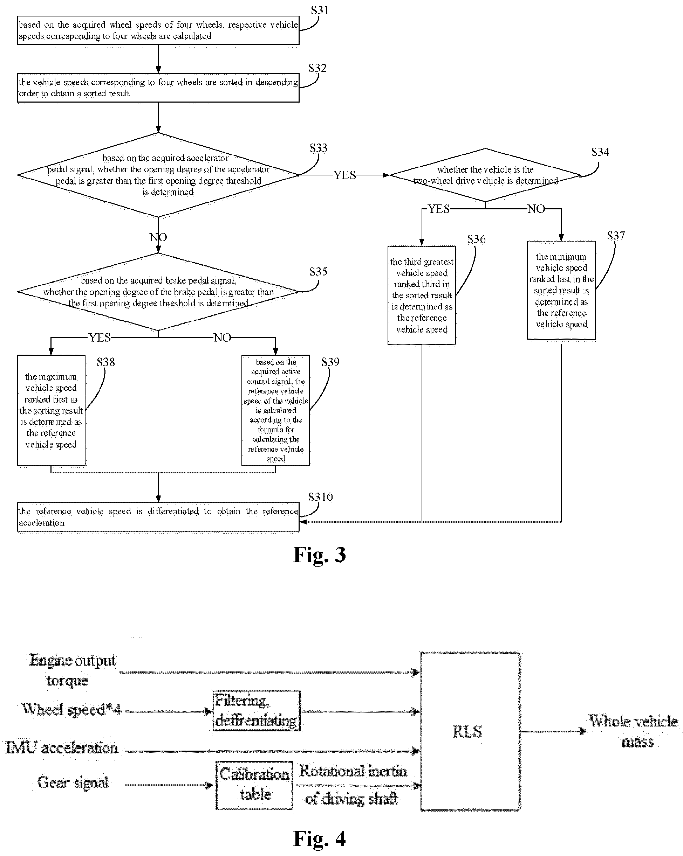

Exemplarily, referring to Fig. 3, Fig. 3 is a schematic flowchart of determining a reference acceleration. As shown in Fig. 3, the determining a reference acceleration may include the following steps S31-S310.

In S31: based on the acquired wheel speeds of four wheels, respective vehicle speeds corresponding to four wheels are calculated.

In S32: the vehicle speeds corresponding to four wheels are sorted in descending order to obtain a sorted result.

In S33: based on the acquired accelerator pedal signal, whether the opening degree of the accelerator pedal is greater than the first opening degree threshold is determined, and if so; S34 is executed, if not, S35 is executed.

In S34: whether the vehicle is the two-wheel drive vehicle is determined, and if so, S36 is executed, if not, the vehicle is determined to be the four-wheel drive vehicle, S37 is executed.

In S35: based on the acquired brake pedal signal, whether the opening degree of the brake pedal is greater than the first opening degree threshold is determined, and if so, S38 is executed; if not, S39 is executed.

In S36: the third greatest vehicle speed ranked third in the sorted result is determined as the reference vehicle speed, and S310 is executed.

In S37: the minimum vehicle speed ranked last in the sorted result is determined as the reference vehicle speed, and S310 is executed.

In S38: the maximum vehicle speed ranked first in the sorted result is determined as the reference vehicle speed, and S310 is executed.

In S39: based on the acquired active control signal, the reference vehicle speed of the vehicle is calculated according to the formula for calculating the reference vehicle speed, and S310 is executed.

In S310: the reference vehicle speed is differentiated to obtain the reference acceleration.

In some embodiments, for the vehicle installed with the suspension height sensor, in the S13, the vehicle body posture information may be determined based on measurement data of the suspension height sensor installed in the vehicle. When the vehicle body posture information is determined based on the measurement data of the suspension height sensor, the suspension reference longitudinal slope, the vehicle body pitch angle and/or the vehicle body roll angle of the vehicle may be determined, and the determined suspension reference longitudinal slope, the determined vehicle body pitch angle and/or the determined vehicle body roll angle may be determined as the vehicle body posture information.

The suspension reference longitudinal slope of the vehicle may be determined based on the measurement data of the suspension height sensor installed in the vehicle by the following steps of:

determining a gross vehicle mass of the vehicle,

determining, based on the gross vehicle mass, a height of a center of the gross vehicle mass of the vehicle,

acquiring height information of the four wheels of the vehicle, where the height information of the four wheels is measured by a suspension height sensor installed in the vehicle, and the height information of the four wheels includes a height of a connection point between each of the wheels and a vehicle body relative to the wheel,

determining, based on the height information of the four wheels, vertical forces of the four wheels, and

determining, based on the gross vehicle mass, the height of the center of the gross vehicle mass, and the vertical forces of the four wheels, a suspension reference longitudinal slope corresponding to the vehicle.

The gross vehicle mass of the vehicle often includes the unsprung mass and the sprung mass. The unsprung mass mainly includes weights of a plurality of parts, such as partial weights of the axle, the wheel bearing, the wheel hub (horn), the tire, and the transmission shaft, and weights of the shock absorber and the suspension link. The sprung mass refers to mass of the vehicle other than the unsprung mass and often includes weights of the frame, the power system, the transmission apparatus, the occupant, the luggage, and the like. Generally, the unsprung mass of the vehicle does not change after the vehicle leaves the factory. Therefore, the unsprung mass may be regarded as the fixed value and may be acquired directly. Since the sprung mass contains non-fixed mass such as weights of the occupant and the luggage, the sprung mass and the gross vehicle mass are not fixed values and need to be calculated in real time when being used.

When the vehicle travels, the following formula may be obtained using the vehicle longitudinal force analysis:

$$m = \frac{F - F_r}{a + gsin\theta_g}$$

where m represents the gross vehicle mass, F represents the driving force of the vehicle, $F_r$ represents the rolling resistance of the vehicle, $a$ represents the acceleration of the vehicle, $g$ represents the gravitational acceleration, and $\theta_g$ represents the longitudinal slope of the road on which the vehicle travels.

Here:

$$a_{IMU} - a_{vef} = gsin\theta_g$$

where $a_{IMU}$ represents the measured acceleration of the vehicle, and $a_{vef}$ represents the reference acceleration of the vehicle.

Under this condition, the rolling resistance of the vehicle is ignored, then the corresponding wheel rotational inertia (the mechanical structure of the belt transmission part) is determined based on the gear signal of the vehicle, and the following formula for the dynamic relationship of the tire rotational freedom may be obtained using the dynamic relationship of the tire rotational freedom:

$$J\ddot{w}_l = T_i - F_{xi}$$

where J represents the wheel rotational inertia, and part of the wheel rotational inertias of the transmission system are different in different gears, $\ddot{w}_l$ represents the angular acceleration of an i-th one of the wheels, $T_i$ represents the driving

torque for the i-th one of the wheels, and $F_{xi}$ represents the longitudinal force applied to the i-th one of the wheels by the ground.

Then, the following formula for calculating the gross vehicle mass may be obtained, the formula is as follows.

$$\mathrm{m} = \frac{\sum_1^4 F_{xi}}{a_{IMU}}$$

Based on the above analysis, when the vehicle starts and accelerates, the gross vehicle mass of the vehicle may be determined by the following steps of:

acquiring an engine output torque, a gear signal, and the wheel speeds of the four wheels of the vehicle,
determining, based on the engine output torque, a driving torque for each of the four wheels,
determining, based on the gear signal, a corresponding wheel rotational inertia,
determining, for each of the four wheels, based on the wheel speed of the wheel, an angular acceleration of the wheel,
calculating, for each of the four wheels, a longitudinal force applied to the wheel by ground based on the wheel rotational inertia, the driving torque for the wheel and the angular acceleration of the wheel according to a preset formula for a dynamic relationship of a tire rotational freedom, and
determining a quotient of a sum of the longitudinal forces applied to the four wheels by the ground divided by the measured acceleration as the gross vehicle mass of the vehicle.

Referring to Fig. 4, it is a schematic view of determining gross vehicle mass of a vehicle according to embodiments of the present disclosure. As shown in Fig. 4, the gross vehicle mass may be estimated based on the engine output torque, the wheel speeds of four wheels of the vehicle, the IMU acceleration collected by the IMU (that is, the measured acceleration of the vehicle), and the gear signal. The driving torque for each wheel may be determined based on the engine output torque, the corresponding wheel rotational inertia (that is, the rotational inertia of the driving shaft) may be determined based on the gear signal by looking up the calibration table, and for each of four wheels, the angular acceleration of the wheel may be obtained by filtering and differentiating the wheel speed of the wheel. After the above processing, for each wheel, based on the wheel rotational inertia, the driving torque for the wheel, the angular acceleration of the wheel, the longitudinal force applied to the wheel by the ground may be calculated according to the preset formula for the dynamic relationship of the tire rotational freedom using the recursive least squares (RLS) finally, the quotient of the sum of the longitudinal forces applied to four wheels by the ground divided by the measured acceleration is determined as the gross vehicle mass of the vehicle. By the above manner, when the vehicle starts and accelerates, the engine output torque signal and the wheel speed signals of four wheels are used, the wheel rotational inertia is corrected by means of the gear of the vehicle, so that the overall mass of the vehicle may be estimated, and the accurate gross vehicle mass may be obtained.

As an example, based on the gross vehicle mass, the height of the center of gross vehicle mass may be determined based on the following formula for calculating the height of the center of gross vehicle mass of the vehicle:

$$\mathrm{h} = \frac{m_w R + (m - m_w) * H}{m}$$

where h represents the height of the center of gross vehicle mass, $m_w$ represents the unsprung mass, $m$ represents the gross vehicle mass, $R$ represents the radius of the wheel, and $H$ represents the height of the center of the sprung mass relative to the ground.

The radius $R$ of the wheel and the unsprung mass $m_w$ are often fixed values and may be acquired directly. The height h of the center of the sprung mass may then be obtained by summing the measurement data of the suspension height sensor and the distance from the lower suspension arm to the ground.

The installing position of the suspension height sensor of the vehicle may often include at least three positions of the left front position, the left rear position, the right front position, and the right rear position of the vehicle. Based on the priori knowledge that a plane may be determined by three points, the height information of four wheels of the vehicle may be determined based on the measurement data of three suspension height sensors. The height information of the wheels is equivalent to the absolute value of the length of the suspension spring.

After the height information of the four wheels is determined, the vertical forces of four wheels may be calculated.

The vertical force for each of the four wheels of the vehicle may be calculated based on the following formula:

$$F_{zi} = K_i h_i + C h_i$$

where $F_{zi}$ represents the vertical force corresponding to the wheel $i$; $i$ may be FL, FR, RL or RR, where FL, FR, RL and RR represent the front left, the front right, the rear left and the rear right, respectively; $K_i$ represents the suspension stiffness; $h_i$ represents the height information corresponding to the i-th one of the wheels measured by the suspension height sensor, that is, the height of the connection point between the i-th one of the wheels and the vehicle body relative to the i-th one of the wheels; and $C$ represents the suspension damping.

When the suspension reference longitudinal slope corresponding to the vehicle is determined based on the gross vehicle mass, the height of the center of gross vehicle mass and the vertical forces of the four wheels, the suspension reference longitudinal slope may be determined based on the following formula for calculating the suspension reference longitudinal slope:

The formula for calculating the suspension reference longitudinal slope includes:

$$\frac{F_{ZF} - F_{ZR}}{G} \cdot (a + b) + (a - b)cos\theta_k = 2hsin\theta_k$$

where $\theta_k$ represents the suspension reference longitudinal slope, $F_{ZF}$ represents the vertical force of the front axle of the vehicle, $F_{ZR}$ represents the vertical force of the rear axle of the vehicle, $G$ represents a gravity of the vehicle and is equal to the product of the gross vehicle mass of the vehicle and a gravitational acceleration, $a$ represents the distance from the center of mass of the vehicle to the front axle, $b$ represents the distance from the center of mass of the vehicle to the rear axle, and $h$ represents the height of the center of gross vehicle mass of the vehicle. The vertical force $F_{ZF}$ of the front axle is the sum of the vertical force of the left front wheel and the vertical force of the right front wheel, and the vertical force $F_{ZR}$ of the rear axle is the sum of the vertical force of the left rear wheel and the vertical force of the right rear wheel.

By the above method, the latest gross vehicle mass may be determined in real time, so that the suspension reference longitudinal slope may be calculated through the suspension height sensor and the gross vehicle mass. Since when the vehicle is traveling, the suspension is often in the dynamic process, and the distances $a$ and $b$ from the center of mass of the vehicle to the front axle and the rear axle may change as the different load conditions of the vehicle, the above formula cannot accurately reflect the longitudinal slope of the vehicle, but may effectively correct the zero point drift of the IMU sensor of the vehicle, so that the estimation accuracy of the longitudinal slope of the vehicle may be increased based on the suspension reference longitudinal slope.

Correspondingly, in some embodiments, under a condition that the vehicle body posture information includes the suspension reference longitudinal slope, in the S14, the vehicle driving slope may be determined by the following steps of:

determining, based on the measured acceleration and the reference acceleration, a first longitudinal slope corresponding to the vehicle,

correcting, based on the suspension reference longitudinal slope, the first longitudinal slope to obtain a second longitudinal slope, and

determining the second longitudinal slope as the longitudinal slope of the driving slope corresponding to the vehicle.

Based on the measured acceleration and the reference acceleration, the first longitudinal slope corresponding to the vehicle may be calculated based on the preset formula for calculating the first longitudinal slope.

The formula for calculating the first longitudinal slope includes:

$$a_{IMU} = a_{vef} + gsin\theta_g$$

where $a_{IMU}$ represents the measured acceleration, $a_{vef}$ represents the reference acceleration, $g$ represents the gravitational acceleration, and $\theta_g$ represents the longitudinal slope.

The correcting, based on the suspension reference longitudinal slope, the first longitudinal slope to obtain the second longitudinal slope may include: subtracting the suspension reference longitudinal slope from the first longitudinal slope to obtain the corrected second longitudinal slope.

By the above method, the calculated driving slope is corrected using the suspension reference longitudinal slope, so that the effect of the changes in the vehicle body posture on the driving slope estimation is eliminated, the estimation error caused by the road bumpiness and the vehicle vibration may be reduced, and the accuracy of the estimated result of the slope of a complex site is increased.

Further, the vehicle body posture information includes the suspension reference longitudinal slope, and the S14 may further include:

calculating, based on the calculated second longitudinal slope, the first lateral slope of the vehicle according to the preset formula for calculating the first lateral slope, and

determining the first lateral slope as the lateral slope of the driving slope corresponding to the vehicle.

The formula for calculating the first lateral slope includes:

$$tan^2\theta_g + tan^2\theta_b = tan^2\left(acos\frac{a_z}{g}\right)$$

where $\theta_b$ represents the lateral slope, $a_z$ represents the vertical acceleration of the vehicle, and $a$ represents the distance from the center of mass of the vehicle to the front axle of the vehicle. Here, $a_z$ may be determined by the vertical controller.

In some embodiments, when the driving slope is estimated, in addition to the effect of the vehicle body posture, the zero point drift of the sensor may also affect the accuracy of the estimated result of the driving slope. In view of this, in order to further increase the accuracy of the estimated result of the driving slope, the correcting, based on the suspension reference longitudinal slope, the first longitudinal slope to obtain the second longitudinal slope may include:

correcting, under a condition that it is determined that the suspension reference longitudinal slope is greater than or equal to a first angle threshold, or it is determined that a difference between the measured acceleration and the reference acceleration is less than or equal to a first acceleration threshold, the first longitudinal slope based on the suspension reference longitudinal slope to obtain the second longitudinal slope.

The first angle threshold and the second acceleration threshold may be determined by the sensor for measuring the acceleration of the vehicle. For example, the total drift of the acceleration sensor of the current vehicle controller may be up to about 20 mg, so that the error of the accuracy of the conventional method for estimating slope is at least about 1°. Therefore, the first angle threshold may be set to be 1°, and the second acceleration threshold may be set to be 20 mg.

Exemplarily, after the first longitudinal slope is calculated and before the first longitudinal slope is corrected using the suspension reference longitudinal slope $\theta_k$, it may be determined first that whether $\theta_k$ is less than the first angle threshold and whether $a_{IMU} - a_{veh}$ is greater than the second acceleration threshold. If it is determined that $\theta_k$ is less than the first angle threshold and $a_{IMU} - a_{ve}$ is greater than the second acceleration threshold, it means that the vehicle does not actually go uphill, the error is caused by the drift of the sensor, the zero drift is cleared from the sensor readings, and the first longitudinal slope is not corrected; otherwise, the first longitudinal slope is corrected.

$$\frac{F_{ZF} - F_{ZR}}{G} \cdot c = hsin\theta_{k'}$$

where c represents the wheel tread.

By the above method, the effect of the drift of the acceleration sensor on the estimation of the driving slope may be eliminated, and the accuracy of the estimated result is improved.

In some embodiments, based on the measurement data of the suspension height sensor, the vehicle body pitch angle and/or the vehicle body roll angle of the vehicle may also be determined as the vehicle body posture information of the vehicle. The determining the vehicle body pitch angle and/or the vehicle body roll angle may include:

acquiring the height information of the four wheels,
determining, based on the height information of the four wheels, the vehicle body pitch angle corresponding to the vehicle according to a preset formula for calculating the pitch angle, and/or
determining, based on the height information of the four wheels, the vehicle body roll angle corresponding to the vehicle according to a preset formula for calculating the roll angle.

The formula for calculating the pitch angle includes:

$$\theta_p = \frac{h_{FL} - h_{RL}}{L}$$

The formula for calculating the roll angle includes:

$$\theta_r = \frac{h_{FL} - h_{FR}}{BF}$$

where $\theta_p$ represents the vehicle body pitch angle, $\theta_r$ represents the vehicle body roll angle, $h_{FL}$ represents the height information of the left front wheel, $h_{RL}$ represents the height information of the left rear wheel, $h_{FR}$ represents the height information of the right front wheel, $L$ represents the distance from the front axle to the rear axle of the vehicle, and $BF$ represents the tread between the left front wheel and the right front wheel of the vehicle.

Correspondingly, in some embodiments, under a condition that the vehicle body posture information includes the vehicle body pitch angle, in S14, the vehicle driving slope may be determined by the following step of:

> calculating, based on the measured acceleration, the reference acceleration and the vehicle body pitch angle, a third longitudinal slope according to a preset formula for calculating the second longitudinal slope, and
> determining the third longitudinal slope as the longitudinal slope of the driving slope corresponding to the vehicle.

The formula for calculating the second longitudinal slope includes:

$$a_{vef}cos\theta_p + gsin(\theta_g + \theta_p) = a_{IMU}$$

where $a_{vef}$ represents the reference acceleration, $\theta_p$ represents the vehicle body pitch angle, and $\theta_g$ represents the longitudinal slope.

Further, under a condition that, in addition to the vehicle body pitch angle, the vehicle body posture information further includes the vehicle body roll angle, in S14, the determining the vehicle driving slope may further include:

> calculating, the second lateral slope corresponding to the vehicle based on the third longitudinal slope, the measured acceleration, the reference acceleration, the vehicle body pitch angle and the vehicle body roll angle according to a preset formula for calculating a second lateral slope, and
> determining the second lateral slope as the lateral slope of the driving slope corresponding to the vehicle.

The formula for calculating the second lateral slope includes:

$$tan^2(\theta_g + \theta_p) + tan^2(\theta_b + \theta_r) = tan^2\theta$$

$$a_z = gcos\theta + a_{vef}sin\theta_p$$

where $\theta_b$ represents the lateral slope, $\theta_r$ represents the vehicle body roll angle, and $a_z$ represents the vertical acceleration of the vehicle and may be determined by the vertical controller.

It may be known from the above formula that, when the longitudinal slope is calculated, the vehicle body pitch angle is considered; and when the lateral slope is calculated, the vehicle body roll angle is considered. In this way, the correction of the driving slope is achieved using the vehicle body pitch angle and the vehicle body roll angle, so that the estimation error caused by the road bumpiness and the vehicle vibration is reduced, and the estimation accuracy of the driving slope of the complex site is improved.

In addition, by the above method, by combining the information of the vertical controller and by means of the suspension height sensor, the zero drift of the acceleration sensor may be eliminated, and the accuracy of the estimated result is improved.

In some embodiments, considering that the frequent gear changes during the driving of the vehicle may also affect the estimation of the driving slope, in order to further improve the accuracy of the estimated result of the driving slope, before the S14 is executed, the following steps may be executed, which include:

> acquiring the gear signal of the vehicle,
> acquiring, under a condition that it is determined that the gear of the vehicle changes based on the gear signal, a correction parameter corresponding to the gear signal, and
> correcting, based on the correction parameter, the reference acceleration using the preset correction formula.

The acquiring the correction parameter corresponding to the gear signal may include: acquiring the corresponding correction parameter from the preset calibration table of the gear signal and the correction parameter, where the calibration table may include a plurality of correction parameters related to gear switching.

The correction formula includes:

$$a_{vef} = \lambda a_{vef_{(t-1)}} + (1-\lambda)a_{vef_{(t)}}$$

where $a_{vef}$ at the left side of the formula represents the corrected reference acceleration, $\lambda$ represents the correction parameter, $a_{vef(t-1)}$ represents the reference acceleration corresponding to the previous moment of the moment t, $a_{vef(t)}$ represents the reference acceleration corresponding to the moment t, where the moment t is the moment when the gear changes.

Correspondingly, in S14, the determining, based on the measured acceleration, the reference acceleration, and the vehicle body posture information, the driving slope corresponding to the vehicle may include:
determining, based on the measured acceleration, the vehicle body posture information, and the corrected reference acceleration, the driving slope corresponding to the vehicle.

By the above method, the effect of the gear change on the slope estimation is reduced, and the estimation error caused by the frequent gear changes during the off-road of the vehicle is improved. In the method for estimating a vehicle driving slope according to the embodiments of the present disclosure, the weighted gain of the calculation algorithm, that is, the correction parameter, can be adjusted based on the change in the gear signal, so that when the gear, that is, driving and braking, frequently changes, the consistency of the slope output signals is ensured, and the algorithm failure and the result error caused by the complex road conditions are avoided.

In addition to correcting the reference acceleration based on the gear signal, the reference acceleration may be corrected by the low-pass filtering, so that the consistency of the slope output signals may also be ensured, and the algorithm failure and the result error caused by the complex road conditions may also be avoided.

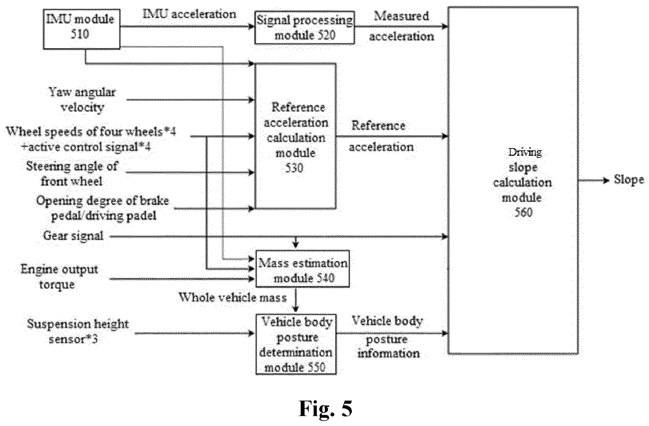

Fig. 5 is a schematic structural view of a system for estimating a vehicle driving slope according to an embodiment of the present disclosure. As shown in Fig. 5, the system for estimating a vehicle driving slope may include:
an IMU module 510, a signal processing module 520, a reference acceleration calculation module 530, a mass estimation module 540, a vehicle body posture determination module 550, and a driving slope calculation module 560.

The IMU module 510 is mainly configured to collect the IMU acceleration of the vehicle.

The signal processing module 520 is mainly configured to perform signal processing on the IMU acceleration collected by the IMU module 510, so as to obtain the measured acceleration.

The reference acceleration calculation module 530 is mainly configured to determine the reference acceleration based on the IMU acceleration, the yaw angular velocity, the wheel speeds and the active control signals of four wheels, the steering angle of the front wheel, the opening degree of the brake pedal, and the opening degree of the accelerator pedal.

The mass estimation module 540 is mainly configured to determine the gross vehicle mass of the vehicle based on the IMU acceleration, the gear signal, the wheel speeds and the active control signals of four wheels, and the engine output torque.

The vehicle body posture determination module 550 is mainly configured to determine the vehicle body posture information of the vehicle based on the information collected by the suspension high-speed sensor and the gross vehicle mass.

The driving slope calculation module 560 is mainly configured to determine the vehicle driving slope based on the measured acceleration, the reference acceleration, and the vehicle body posture information.

Based on the method for estimating a vehicle driving slope according to the above embodiments, correspondingly, the present disclosure further provides a specific implementation of an apparatus for estimating a vehicle driving slope. The following embodiments can be referred.

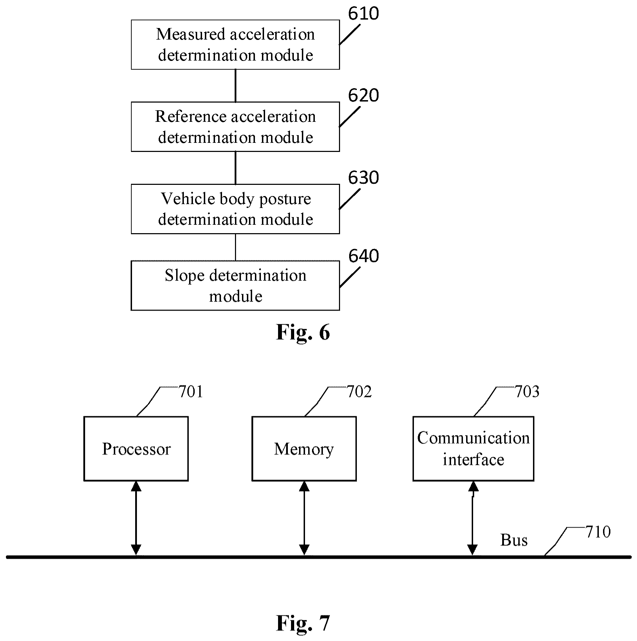

Referring to Fig. 6, an apparatus for estimating a vehicle driving slope according to an embodiment of the present disclosure includes a measured acceleration determination module 610, a reference acceleration determination module 620, a vehicle body posture determination module 630 and a slope determination module 640.

The measured acceleration determination module 610 is configured to determine, based on measurement data of an acceleration sensor installed in a vehicle, measured acceleration of the vehicle.

The reference acceleration determination module 620 determines, based on a wheel speed of the vehicle, reference acceleration of the vehicle,

The vehicle body posture determination module 630 is configured to determine vehicle body posture information of the vehicle; and

The slope determination module 640 is configured to determine, based on the measured acceleration, the reference acceleration, and the vehicle body posture information, a driving slope corresponding to the vehicle, the driving slope comprising a longitudinal slope and/or a lateral slope.

The apparatus for estimating a vehicle driving slope according to the embodiments of the present disclosure is configured to acquire the measured acceleration of the vehicle, determine the reference acceleration and the vehicle body posture information of the vehicle, and determine the driving slope corresponding to the vehicle based on the measured acceleration, the reference acceleration, and the vehicle body posture information. According to the embodiments of the present disclosure, when the driving slope is estimated, the effect of the vehicle body posture on the slope estimation is considered, so that more accurate slope estimation than the conventional solution is achieved.

In some embodiments, the measured acceleration determination module 610 includes:

an acceleration acquisition unit configured to acquire the IMU acceleration output by the inertial measurement unit IMU installed in the vehicle,
a first filtering unit configured to perform low-pass filtering on the IMU acceleration by the low-pass filter to obtain the first acceleration, and
a second filtering unit configured to filter the first acceleration by the notch filter to obtain the measured acceleration of the vehicle.

In some embodiments, the reference acceleration determination module 620 may include:

a wheel speed acquisition unit configured to acquire the wheel speeds of four wheels of the vehicle, where four wheels include the left front wheel, the right front wheel, the left rear wheel, and the right rear wheel,
a vehicle speed determination unit configured to determine, for each of the wheels, based on the wheel speed of the wheel and the linear expression corresponding to the wheel, the vehicle speed corresponding to the wheel, where the linear expression is configured for characterizing the corresponding relationship between the wheel speed of the wheel and the vehicle speed,
a pedal signal acquisition unit configured to acquire the pedal signal of the vehicle, where the pedal signal includes the accelerator pedal signal and/or the brake pedal signal,
a first reference vehicle speed determination unit configured to determine, under a condition that it is determined that the vehicle is in the accelerating state based on the accelerator pedal signal and the vehicle is the two-wheel drive vehicle, the third greatest vehicle speed of the vehicle speeds corresponding to four wheels as the reference vehicle speed based on the ranking result,
a second reference vehicle speed determination unit configured to determine, under a condition that it is determined that the vehicle is in the accelerating state based on the accelerator pedal signal and the vehicle is the four-wheel drive vehicle, the minimum vehicle speed of the vehicle speeds corresponding to four wheels as the reference vehicle speed based on the ranking result,
a third reference vehicle speed determination unit configured to determine, under a condition that it is determined that the vehicle is in the deceleration state based on the brake pedal signal, the maximum vehicle speed of the vehicle speeds corresponding to four wheels as the reference vehicle speed based on the ranking result, and
a fourth reference vehicle speed determination unit configured to determine, under a condition that it is not determined that the vehicle is in the acceleration state based on the accelerator pedal signal and it is not determined that the vehicle is in the deceleration state based on the brake pedal signal, a weighted average of the vehicle speeds corresponding to four wheels as the reference vehicle speed.

In some embodiments, the fourth reference vehicle speed determination unit is specifically configured to:

acquire the active control signal of the vehicle,
determine the first weight corresponding to the active control wheel and the second weight corresponding to other wheels, where the active control wheel is the wheel of four wheels that is controlled by the active control signal, the other wheels are any other wheels of four wheels than the active control wheel, the first weight is less than the second weight, and the sum of the first weight and the second weight is 1, and
calculate the reference vehicle speed of the vehicle, based on the vehicle speeds corresponding to four wheels, the first weight, and the second weight, according to the preset formula for calculating the reference vehicle speed.

The formula for calculating the reference vehicle speed includes:

$$V_{ref} = \frac{\sum_1^4 (w_2 - Acti * (w_2 - w_1)) V_i}{\sum_1^4 (w_2 - Acti * (w_2 - w_1))}$$

where $V_{ref}$ represents the reference vehicle speed, $w_2$ represents the second weight, $w_1$ represents the first weight, $V_i$ represents the vehicle speed corresponding to the i-th one of the wheels, and $Acti$ is a flag value with a value being 0 or 1. Under a condition that the i-th one of the wheels is the active control wheel, the value of $Acti$ is 1, and under a condition that the i-th one of the wheels is any one of the other wheels, the value of $Acti$ is 0.
In some embodiments, the vehicle body posture determination module 630 includes:

a gross vehicle mass determination unit configured to determine the gross vehicle mass of the vehicle,
a height-of-center-of-gross-vehicle-mass determination unit configured to determine, based on the gross vehicle mass, the height of the center of gross vehicle mass of the vehicle,

a wheel height information acquisition unit configured to acquire height information of four wheels, where the height information of the wheels is measured by the suspension height sensor installed in the vehicle, and the height information of the wheels includes the height of the connection point between each of the wheels and the vehicle body relative to the wheel,

a wheel vertical force determination unit configured to determine, based on the height information of the four wheels, the vertical forces of the four wheels,

a suspension reference longitudinal slope determination unit configured to determine, based on the gross vehicle mass, the height of the center of gross vehicle mass, and the vertical forces of the four wheels, the suspension reference longitudinal slope corresponding to the vehicle, and

a first posture information determination unit configured to determine the suspension reference longitudinal slope as the vehicle body posture information of the vehicle.

In some embodiments, the gross vehicle mass determination unit is specifically configured to:

acquire the engine output torque, the gear signal, and the wheel speeds of four wheels of the vehicle, determine, based on the engine output torque, the driving torque for each wheel, determine, based on the gear signal, the corresponding wheel rotational inertia, determine, for each wheel, the angular acceleration of the wheel based on the wheel speed of the wheel, calculate, for each wheel, based on the wheel rotational inertia, the driving torque for the wheel and the angular acceleration of the wheel, the longitudinal force applied to the wheel by the ground according to the preset formula for the dynamic relationship of the tire rotational freedom, and determine the quotient of the sum of the longitudinal forces applied to four wheels by the ground divided by the measured acceleration as the gross vehicle mass of the vehicle.

The formula for the dynamic relationship of the tire rotational freedom is as follows:

$$J\ddot{w}_l = T_i - F_{xi}$$

where J represents the wheel rotational inertia, $\ddot{w}_l$ represents the angular acceleration of the i-th one of the wheels, $T_i$ represents the driving torque for the i-th one of the wheels, and $F_{xi}$ represents the longitudinal force applied to the i-th one of the wheels by the ground.

In some embodiments, the height-of-center-of-gross-vehicle-mass determination unit is specifically configured to:

calculate, based on the gross vehicle mass, the height of the center of gross vehicle mass of the vehicle according to the preset formula for calculating the height of the center of gross vehicle mass.

The preset formula for calculating the height of the center of gross vehicle mass includes:

$$h = \frac{m_w R + (m - m_w) * H}{m}$$

where h represents the height of the center of gross vehicle mass, $m_w$ represents the unsprung mass, m represents the gross vehicle mass, R represents the radius of the wheel, and H represents the height of the sprung center of mass relative to the ground.

In some embodiments, the suspension reference longitudinal slope determination unit is specifically configured to:

calculate, the suspension reference longitudinal slope corresponding to the vehicle based on the gross vehicle mass, the height of the center of gross vehicle mass and the vertical forces of four wheels according to the preset formula for calculating the suspension reference longitudinal slope.

The formula for calculating the suspension reference longitudinal slope includes:

$$\frac{F_{ZF} - F_{ZR}}{G} \cdot (a + b) + (a - b)cos\theta_k = 2hsin\theta_k$$

where $\theta_k$ represents the suspension reference longitudinal slope, $F_{ZF}$ represents the vertical force of the front axle of the vehicle and is the sum of the vertical force of the left front wheel and the vertical force of the right front wheel, $F_{ZR}$ represents the vertical force of the rear axle of the vehicle and is the sum of the vertical force of the left rear wheel and the vertical force of the right rear wheel, *G* represents a gravity of the vehicle and is equal to the product of the gross vehicle mass of the vehicle and a gravitational acceleration, *a* represents the distance from the center of mass of the vehicle to the front axle, *b* represents the distance from the center of mass of the vehicle to the rear axle, and *h* represents the height of the center of gross vehicle mass of the vehicle.

In some embodiments, the vehicle body posture determination module 630 includes:

a wheel height information acquisition unit configured to acquire height information of four wheels of the vehicle, where the height information of the wheels is measured by the suspension height sensor installed in the vehicle, and the height information of the wheels includes the height of the connection point between each of the wheels and the vehicle body relative to the wheel,
a vehicle body pitch angle determination unit configured to determine, based on the height information of four wheels, the vehicle body pitch angle corresponding to the vehicle,
a vehicle body roll angle determination unit configured to determine, based on the height information of four wheels, the vehicle body roll angle corresponding to the vehicle, and
a second posture information determination unit configured to determine the vehicle body pitch angle and/or the vehicle body roll angle as the vehicle body posture information of the vehicle.

In some embodiments, the vehicle body pitch angle determination unit is specifically configured to:

determine, based on the height information of four wheels, the vehicle body pitch angle corresponding to the vehicle according to the preset formula for calculating the pitch angle,
the vehicle body roll angle determination is unit specifically configured to:
determine, based on the height information of four wheels, the vehicle body roll angle corresponding to the vehicle according to the preset formula for calculating the roll angle,.

The formula for calculating the pitch angle includes:

$$\theta_p = \frac{h_{FL} - h_{RL}}{L}$$

The formula for calculating the roll angle includes:

$$\theta_r = \frac{h_{FL} - h_{FR}}{BF}$$

where $\theta_p$ represents the vehicle body pitch angle, $\theta_r$ represents the vehicle body roll angle, $h_{FL}$ represents the height information corresponding to the left front wheel, $h_{RL}$ represents the height corresponding to the left rear wheel, $h_{FR}$ represents the height information corresponding to the right front wheel, *L* represents the distance from the front axle to the rear axle of the vehicle, and *BF* represents the tread between the left front wheel and the right front wheel of the vehicle.

In some embodiments, the slope determination module 640 includes:

a first longitudinal slope determination unit configured to determine, based on the measured acceleration and the reference acceleration, the first longitudinal slope corresponding to the vehicle,
a longitudinal slope correction unit configured to correct, based on the suspension reference longitudinal slope, the first longitudinal slope to obtain the second longitudinal slope, and
a longitudinal slope determination unit configured to determine the second longitudinal slope as the longitudinal slope of the driving slope corresponding to the vehicle.

In some embodiments, the longitudinal slope correction unit is specifically configured to:
correct, under a condition that it is determined that the suspension reference longitudinal slope is greater than or equal to the first angle threshold, or it is determined that the difference between the measured acceleration and the reference acceleration is less than or equal to the first acceleration threshold, the first longitudinal slope to obtain the second longitudinal slope based on the suspension reference longitudinal slope.

In some embodiments, the vehicle body posture information includes the vehicle body pitch angle, and the slope determination module 640 is specifically configured to:

calculate, based on the measured acceleration, the reference acceleration, the vehicle body pitch angle, the third longitudinal slope according to the preset formula for calculating the second longitudinal slope, and determine the third longitudinal slope as the longitudinal slope of the driving slope corresponding to the vehicle.

The formula for calculating the second longitudinal slope includes:

$$a_{vef}cos\theta_p + gsin(\theta_g + \theta_p) = a_{IMU}$$

where $a_{vef}$ represents the reference acceleration, $\theta_p$ represents the vehicle body pitch angle, and $\theta_g$ represents the longitudinal slope.

In some embodiments, the vehicle body posture information further includes the vehicle body roll angle, and the slope determination module 640 is further specifically configured to:

calculate, the second lateral slope corresponding to the vehicle based on the third longitudinal slope, the measured acceleration, the reference acceleration, the vehicle body pitch angle and the vehicle body roll angle according to the preset formula for calculating the second lateral slope, and
determine the second lateral slope as the lateral slope of the driving slope corresponding to the vehicle.

The formula for calculating the second lateral slope includes:

$$tan^2(\theta_g + \theta_p) + tan^2(\theta_b + \theta_r) = tan^2\theta$$

$$a_z = gcos\theta + a_{vef}sin\theta_p$$

where $\theta_b$ represents the lateral slope, $\theta_r$ represents the vehicle body roll angle, and $a_z$ represents the vertical acceleration of the vehicle.

In some embodiments, the apparatus for estimating a vehicle driving slope may further include (not shown in the drawing) the acceleration correction module.

The acceleration correction module includes:

the gear signal acquisition unit, configured to acquire, before the driving slope corresponding to the vehicle is determined based on the measured acceleration, the reference acceleration, and the vehicle body posture information, the gear signal of the vehicle, and
the acceleration correction unit, configured to correct, under a condition that it is determined that the gear of the vehicle changes based on the gear signal, the reference acceleration.

Correspondingly, the slope determination module 640 may be configured to:
determine, based on the measured acceleration, the vehicle body posture information, and the corrected reference acceleration, the driving slope corresponding to the vehicle.

In some embodiments, the acceleration correction unit is specifically configured to:

acquire the correction parameter corresponding to the gear signal, and
correct, based on the correction parameter, the reference acceleration using the preset correction formula.

The correction formula includes:

$$a_{vef} = \lambda a_{vef_{(t-1)}} + (1 - \lambda)a_{vef_{(t)}}$$

where $a_{vef}$ at the left side of the formula represents the corrected reference acceleration, $\lambda$ represents the correction parameter, $a_{vef(t-1)}$ represents the reference acceleration corresponding to the previous moment of the moment t, $a_{vef(t)}$ represents the reference acceleration corresponding to the moment t, where the moment t is the moment when the gear changes.

The apparatus for estimating a vehicle driving slope according to the embodiments of the present disclosure can achieve the processes achieved by the embodiments of the method for estimating a vehicle driving slope, which is not repeated herein to avoid repetition.

Fig. 7 shows a schematic view of a hardware structure of an electronic device according to an embodiment of the present disclosure.

The electronic device may include the processor 701 and the memory 702 storing the computer program instructions.

Specifically, the processor 701 may include the central processing unit (CPU), or the Application Specific Integrated Circuit (ASIC), or may be configured as one or more integrated circuits for implementing the embodiments of the present disclosure.

The memory 702 may include the mass storage for data or instructions. By way of example and not limitation, the memory 702 may include a hard disk drive (HDD), a floppy disk drive, a flash memory, an optical disk, a magneto-optical disk, a magnetic tape, or a universal serial bus (USB) drive or combination of two or more of them. When appropriate, the memory 702 may include a removable or non-removable (or fixed) medium. When appropriate, the memory 702 may be internal or external to the integrated gateway disaster tolerance device. In certain embodiments, the memory 702 is a non-volatile solid state memory. The memory 702 may include a read-only memory (ROM), a random access memory (RAM), a magnetic disk storage medium device, an optical storage medium device, a flash memory device, an electrical, optical, or other physical/tangible memory storage device. Thus, the memory 702 often includes one or more tangible (non-transitory) computer-readable storage media (for example, memory devices) encoded with software which includes computer-executable instructions, the software, when executed (for example, by one or more processors), may perform the operations described in any one of the methods for estimating a vehicle driving slope in the above embodiments.

The processor 701 reads and executes the computer program instructions stored in the memory 702 to implement any one of the methods for estimating a vehicle driving slope in the above embodiments.

In one example, the electronic device may further include the communication interface 703 and the bus 710. As shown in Fig. 7, the processor 701, the memory 702, and the communication interface 703 are connected by the bus 710 and communicate with each other.

The communication interface 703 is mainly configured for achieving communication among the modules, apparatuses, units, and/or devices in the embodiments of the present disclosure.

The bus 710 includes hardware, software, or both, coupling the components of the online data traffic charging device to each other. By way of example and not limitation, the bus may include an accelerated graphics port (AGP) or other graphics buses, an enhanced industry standard architecture (EISA) bus, a front side bus (FSB), a hyper transport (HT) interconnect, an industry standard architecture (ISA) bus, an infinite bandwidth interconnect, a low pin count (LPC) bus, a memory bus, a micro channel architecture (MCA) bus, a peripheral component interconnect (PCI) bus, a PCI-Express (PCI-X) bus, a serial advanced technology attachment (SATA) bus, a video electronics standards association local bus (VLB) bus, or other suitable buses, or a combination thereof. When appropriate, the bus 710 may include one or more buses. Although the particular buses are described and illustrated in the embodiments of the present disclosure, any suitable bus or interconnect is contemplated by the present disclosure.

In addition, in combination with the method for estimating a vehicle driving slope in the above embodiments, embodiments of the present disclosure may provide a computer storage medium for implementation. The computer storage medium stores computer program instructions, the computer program instructions, when executed by a processor, implement any one of the methods for estimating a vehicle driving slope in the above embodiments.

It should be noted that the present disclosure is not limited to the particular configurations and processes described above and illustrated in the drawings. For the sake of brevity, the detailed description of the known methods is omitted here. In the above embodiments, several specific steps are described and shown as examples. However, the process of the method of the present disclosure is not limited to the specific steps described and illustrated herein, and those skilled in the art may make various changes, modifications, and additions or change the order between the steps after understanding the gist of the present disclosure.

The functional modules shown in the structural block diagrams may be implemented as hardware, software, firmware, or a combination thereof. When implemented as hardware, it may be, for example, an electronic circuit, an application specific integrated circuit (ASIC), suitable firmware, a plug-in, a functional card, and the like. When implemented in software, the elements of the present disclosure are programs or code segments which are used for performing a desired task. The programs or code segments may be stored in a machine-readable medium or transmitted by a data signal carried in a carrier wave over a transmission medium or communication link. The "machine-readable medium" may include any medium capable of storing or transmitting information. An example of the machine-readable medium includes an electronic circuit, a semiconductor memory device, a ROM, a flash memory, an erasable ROM (EROM), a floppy disk, a CD-ROM, an optical disk, a hard disk, a fiber optic medium, a radio frequency (RF) link, and the like. The code segments may be downloaded via a computer network such as the Internet, intranet, and the like.

It should also be noted that, in the exemplary embodiments mentioned in the present disclosure, some methods or systems are described based on a series of steps or apparatuses. However, the present disclosure is not limited to the order of the above steps, that is, the steps may be performed in the order mentioned in the embodiments, or may be performed in the order different from that in the embodiments, or several steps may be performed at the same time.

The aspects of the present disclosure are described above with reference to the flowcharts and/or block diagrams of the methods, apparatuses (systems), and computer program products according to the embodiments of the present disclosure. It should be understood that each block in the flowcharts and/or block diagrams, and combinations of blocks in the flowcharts and/or block diagrams, may be implemented by the computer program instructions. These computer program instructions may be provided to a processor of a general purpose computer, a special purpose computer or other programmable data processing apparatus to produce a machine, so that these instructions which are executed by the processor of the computer or other programmable data processing apparatus enable the implementation of the functions/actions specified in one or more blocks of the flowcharts and/or block diagrams. Such a processor may be, but is not limited to, a general purpose processor, a special purpose processor, an application specific processor, or a field programmable logic circuit. It may also be understood that each block in the block diagrams and/or flowcharts and the combinations of blocks in the block diagrams and/or flowcharts may also be implemented by special purpose hardware that performs the specified functions or actions or may be implemented by the combinations of the special purpose hardware and the computer instructions.

The above are only specific implementations of the present disclosure, those skilled in the art may clearly understand that the specific operating processes of the above systems, modules and units may be referred to the corresponding processes in the embodiments of the foregoing method, which is not repeated here for the convenience and brevity of the description. It should be understood that the protection scope of the present disclosure is not limited to this, and any person skilled in the art can easily think of various equivalent modifications or replacements within the technical scope disclosed in the present disclosure, and these modifications or replacements should all be covered within the scope of protection of the present disclosure.

**Claims**

1. A method for estimating a vehicle driving slope, comprising:

   determining, based on measurement data of an acceleration sensor installed in a vehicle, a measured acceleration of the vehicle,
   determining, based on a wheel speed of the vehicle, a reference acceleration of the vehicle,
   determining vehicle body posture information of the vehicle, and
   determining, based on the measured acceleration, the reference acceleration, and the vehicle body posture information, a driving slope corresponding to the vehicle, the driving slope comprising a longitudinal slope and/or a lateral slope.

2. The method according to claim 1, wherein the determining, based on measurement data of an acceleration sensor installed in a vehicle, a measured acceleration of the vehicle comprises:

   acquiring an IMU acceleration output by an Inertial Measurement Unit (IMU) installed in the vehicle,
   performing low-pass filtering on the IMU acceleration by a low-pass filter to obtain a first acceleration, and
   filtering the first acceleration by a notch filter to obtain the measured acceleration of the vehicle.

3. The method according to claim 1 or 2, wherein the determining, based on a wheel speed of the vehicle, a reference acceleration of the vehicle comprises:

   acquiring wheel speeds of four wheels of the vehicle, the four wheels comprising a left front wheel, a right front wheel, a left rear wheel, and a right rear wheel,
   determining, for each of the four wheels, based on the wheel speed of the wheel and a linear expression corresponding to the wheel, a vehicle speed corresponding to the wheel, the linear expression being configured to characterize a corresponding relationship between the wheel speed of the wheel and the vehicle speed,
   acquiring a pedal signal of the vehicle, the pedal signal comprising an accelerator pedal signal and/or a brake pedal signal,
   determining, under a condition that it is determined that the vehicle is in an acceleration state based on the accelerator pedal signal and the vehicle is a two-wheel drive vehicle, the third greatest vehicle speed of the vehicle speeds corresponding to the four wheels as a reference vehicle speed,
   determining, under a condition that it is determined that the vehicle is in the acceleration state based on the accelerator pedal signal and the vehicle is a four-wheel drive vehicle, the minimum vehicle speed of the vehicle speeds corresponding to the four wheels as the reference vehicle speed,
   determining, under a condition that it is determined that the vehicle is in a deceleration state based on the brake pedal signal, the maximum vehicle speed of the vehicle speeds corresponding to the four wheels as the reference vehicle speed, and

determining, under a condition that it is not determined that the vehicle is in the acceleration state based on the accelerator pedal signal and it is not determined that the vehicle is in the deceleration state based on the brake pedal signal, a weighted average of the vehicle speeds corresponding to the four wheels as the reference vehicle speed.

4. The method according to claim 3, wherein the determining a weighted average of the vehicle speeds corresponding to the four wheels as the reference vehicle speed comprises:

acquiring an active control signal of the vehicle,

determining a first weight corresponding to an active control wheel and a second weight corresponding to other wheels, wherein the active control wheel is a wheel of the four wheels that is controlled by the active control signal, the other wheels are any other wheels of the four wheels than the active control wheel, the first weight is less than the second weight, and a sum of the first weight and the second weight is 1, and

calculating, the reference vehicle speed of the vehicle, based on the vehicle speeds corresponding to the four wheels, the first weight, and the second weight, according to a preset formula for calculating the reference vehicle speed,

wherein the formula for calculating the reference vehicle speed comprises:

$$V_{ref} = \frac{\sum_1^4 \left(w_2 - Acti * (w_2 - w_1)\right) V_i}{\sum_1^4 \left(w_2 - Acti * (w_2 - w_1)\right)}$$

where

$V_{ref}$ represents the reference vehicle speed,

$w_2$ represents the second weight,

$w_1$ represents the first weight,

$V_i$ represents the vehicle speed corresponding to an i-th one of the wheels, and

$Acti$ is a flag value with a value being 0 or 1, and under a condition that the i-th one of wheels is the active control wheel, the value of $Acti$ is 1; under a condition that the i-th one of the wheels is any one of the other wheels, the value of $Acti$ is 0.

5. The method according to any one of claims 1-4, wherein the determining vehicle body posture information of the vehicle comprises:

determining a gross vehicle mass of the vehicle,

determining, based on the gross vehicle mass, a height of a center of the gross vehicle mass of the vehicle,

acquiring height information of the four wheels of the vehicle, wherein the height information of the four wheels is measured by a suspension height sensor installed in the vehicle, and the height information of the four wheels comprises a height of a connection point between each of the wheels and a vehicle body relative to the wheel,

determining, based on the height information of the four wheels, vertical forces of the four wheels,

determining, based on the gross vehicle mass, the height of the center of the gross vehicle mass, and the vertical forces of the four wheels, a suspension reference longitudinal slope corresponding to the vehicle, and

determining the suspension reference longitudinal slope as the vehicle body posture information of the vehicle.

6. The method according to claim 5, wherein the determining a gross vehicle mass of the vehicle comprises:

acquiring an engine output torque, a gear signal, and the wheel speeds of the four wheels of the vehicle,

determining, based on the engine output torque, a driving torque for each of the four wheels,

determining, based on the gear signal, a corresponding wheel rotational inertia,

determining, for each of the four wheels, an angular acceleration of the wheel based on the wheel speed of the wheel,

calculating, for each of the four wheels, a longitudinal force applied to the wheel by ground based on the wheel rotational inertia, the driving torque for the wheel, and the angular acceleration of the wheel according to a preset formula for a dynamic relationship of a tire rotational freedom, and

determining a quotient of a sum of the longitudinal forces applied to the four wheels by the ground divided by the measured acceleration as the gross vehicle mass of the vehicle,

wherein the formula for the dynamic relationship of the tire rotational freedom comprises:

$$J\ddot{w}_l = T_i - F_{xi}$$

where

J represents the wheel rotational inertia,

$\ddot{w}_l$ represents the angular acceleration of an i-th one of the wheels,

$T_i$ represents a driving torque for the i-th one of the wheels, and

$F_{xi}$ represents the longitudinal force applied to the i-th one of the wheels by the ground.

7. The method according to claim 5 or 6, wherein the determining, based on the gross vehicle mass, the height of the center of the gross vehicle mass, and the vertical forces of the four wheels, a suspension reference longitudinal slope corresponding to the vehicle comprises:

calculating the suspension reference longitudinal slope corresponding to the vehicle based on the gross vehicle mass, the height of the center of the gross vehicle mass, and the vertical forces of the four wheels according to a preset formula for calculating the suspension reference longitudinal slope,

wherein the formula for calculating the suspension reference longitudinal slope comprises:

$$\frac{F_{ZF} - F_{ZR}}{G} \cdot (a + b) + (a - b)cos\theta_k = 2hsin\theta_k$$

where

$\theta_k$ represents the suspension reference longitudinal slope,

$F_{ZF}$ represents the vertical force of a front axle of the vehicle and is a sum of the vertical force of the left front wheel and the vertical force of the right front wheel,

$F_{ZR}$ represents the vertical force of a rear axle of the vehicle and is a sum of the vertical force of the left rear wheel and the vertical force of the right rear wheel,

$G$ represents a gravity of the vehicle and is equal to a product of the gross vehicle mass of the vehicle and a gravitational acceleration,

$a$ represents a distance from a center of mass of the vehicle to the front axle,

$b$ represents a distance from the center of mass of the vehicle to the rear axle, and

$h$ represents the height of the center of gross vehicle mass of the vehicle.

8. The method according to any one of claims 1-4, wherein the determining vehicle body posture information of the vehicle comprises:

acquiring the height information of the four wheels of the vehicle, wherein the height information of the four wheels is measured by the suspension height sensor installed in the vehicle, and the height information of the four wheels comprises the height of the connection point between each of the wheels and the vehicle body relative to the wheel,

determining, based on the height information of the four wheels, a vehicle body pitch angle and/or a vehicle body roll angle corresponding to the vehicle; and

determining the vehicle body pitch angle and/or the vehicle body roll angle as the vehicle body posture information of the vehicle.

9. The method according to claim 8, wherein the determining, based on the height information of the four wheels, a vehicle body pitch angle and/or a vehicle body roll angle corresponding to the vehicle comprises:

determining, based on the height information of the four wheels, the vehicle body pitch angle corresponding to the vehicle according to a preset formula for calculating the pitch angle, and/or

determining, based on the height information of the four wheels, the vehicle body roll angle corresponding to the vehicle according to a preset formula for calculating the roll angle,

wherein the formula for calculating the pitch angle comprises:

$$\theta_p = \frac{h_{FL} - h_{RL}}{L}$$

the formula for calculating the roll angle comprises:

$$\theta_r = \frac{h_{FL} - h_{FR}}{BF}$$

where
$\theta_p$ represents the vehicle body pitch angle,
$\theta_r$ represents the vehicle body roll angle,
$h_{FL}$ represents height information of the left front wheel,
$h_{RL}$ represents height information of the left rear wheel,
$h_{FR}$ represents height information of the right front wheel,
$L$ represents a distance from the front axle to the rear axle of the vehicle, and
$BF$ represents a tread between the left front wheel and the right front wheel of the vehicle.

**10.** The method according to any one of claims 5-7, wherein the determining, based on the measured acceleration, the reference acceleration, and the vehicle body posture information, a driving slope corresponding to the vehicle comprises:

determining, based on the measured acceleration and the reference acceleration, a first longitudinal slope corresponding to the vehicle,
correcting, based on the suspension reference longitudinal slope, the first longitudinal slope to obtain a second longitudinal slope, and
determining the second longitudinal slope as the longitudinal slope of the driving slope corresponding to the vehicle.

**11.** The method according to claim 10, wherein the correcting, based on the suspension reference longitudinal slope, the first longitudinal slope to obtain a second longitudinal slope comprises:
correcting, under a condition that it is determined that the suspension reference longitudinal slope is greater than or equal to a first angle threshold, or it is determined that a difference between the measured acceleration and the reference acceleration is less than or equal to a first acceleration threshold, the first longitudinal slope to obtain the second longitudinal slope based on the suspension reference longitudinal slope.

**12.** The method according to claim 8 or 9, wherein the vehicle body posture information comprises the vehicle body pitch angle and the vehicle body roll angle, and the determining, based on the measured acceleration, the reference acceleration, and the vehicle body posture information, a driving slope corresponding to the vehicle comprises:

calculating, based on the measured acceleration, the reference acceleration, and the vehicle body pitch angle, a third longitudinal slope according to a preset formula for calculating the second longitudinal slope,
determining the third longitudinal slope as the longitudinal slope of the driving slope corresponding to the vehicle,
calculating the second lateral slope corresponding to the vehicle based on the third longitudinal slope, the measured acceleration, the reference acceleration, the vehicle body pitch angle, and the vehicle body roll angle according to a preset formula for calculating a second lateral slope, and
determining the second lateral slope as the lateral slope of the driving slope corresponding to the vehicle,
wherein the formula for calculating the second longitudinal slope comprises:

$$a_{vef} cos\theta_p + g sin(\theta_g + \theta_p) = a_{IMU}$$

where $a_{vef}$ represents the reference acceleration, $\theta_p$ represents the vehicle body pitch angle, and $\theta_g$ represents the longitudinal slope,
the formula for calculating the second lateral slope comprises:

$$tan^2(\theta_g + \theta_p) + tan^2(\theta_b + \theta_r) = tan^2\theta$$

$$a_z = g cos\theta + a_{vef} sin\theta_p$$

where $\theta_b$ represents the lateral slope, $\theta_r$ represents the vehicle body roll angle, and $a_z$ represents vertical acceleration of the vehicle.

13. The method according to any one of claims 1-12, wherein before the determining, based on the measured acceleration, the reference acceleration, and the vehicle body posture information, a driving slope corresponding to the vehicle, the method further comprises:

acquiring the gear signal of the vehicle,
correcting, under a condition that it is determined that a gear of the vehicle changes based on the gear signal, the reference acceleration,
the determining, based on the measured acceleration, the reference acceleration, and the vehicle body posture information, a driving slope corresponding to the vehicle comprises:
determining, based on the measured acceleration, the vehicle body posture information, and the corrected reference acceleration, the driving slope corresponding to the vehicle.

14. An apparatus for estimating a vehicle driving slope, comprising:

a measured acceleration determination module (610), configured to determine, based on measurement data of an acceleration sensor installed in a vehicle, a measured acceleration of the vehicle,
a reference acceleration determination module (620), configured to determine, based on a wheel speed of the vehicle, a reference acceleration of the vehicle,
a vehicle body posture determination module (630), configured to determine vehicle body posture information of the vehicle, where the vehicle body posture information comprises a suspension reference longitudinal slope, a suspension reference lateral slope, a vehicle body pitch angle and/or a vehicle body roll angle, and
a slope determination module (640), configured to determine, based on the measured acceleration, the reference acceleration, and the vehicle body posture information, a driving slope corresponding to the vehicle, the driving slope comprising a longitudinal slope and/or a lateral slope.

15. An electronic device comprising a processor and a memory storing computer program instructions, wherein the processor, when executing the computer program instructions, implements the method for estimating the vehicle driving slope according to any one of claims 1-13.

16. A computer-readable storage medium storing computer program instructions thereon, wherein the computer program instructions, when executed by a processor, implement the method for estimating the vehicle driving slope according to any one of claims 1-13.

17. A computer program product, wherein instructions in the computer program product, when executed by a processor of an electronic device, cause the electronic device to execute the method for estimating the vehicle driving slope according to any one of claims 1-13.

based on measurement data of an acceleration sensor installed in a vehicle, a measured acceleration of the vehicle is determined

S11

based on a wheel speed of the vehicle, a reference acceleration of the vehicle is determined

S12

vehicle body posture information of the vehicle is determined

S13

based on the measured acceleration, the reference acceleration and the vehicle body posture information, a driving slope corresponding to the vehicle is determined, where the driving slope includes a longitudinal slope and/or a lateral slope

S14

Fig. 1

Active/semi-active suspension input frequency (suspension inherent frequency)

IMU acceleration → Low-pass filter 210 → Notch filter 220 → Measured acceleration

Fig. 2

Fig. 3

Fig. 4

**Fig. 5**

610

Measured acceleration
determination module

620

Reference acceleration
determination module

630

Vehicle body posture
determination module

640

Slope determination
module

**Fig. 6**

701

Processor

702

Memory

703

Communication
interface

Bus

710

**Fig. 7**

**INTERNATIONAL SEARCH REPORT**

| International application No. |
| --- |
| **PCT/CN2023/136058** |

| A. | CLASSIFICATION OF SUBJECT MATTER |
| --- | --- |

B60W40/076(2012.01)i

According to International Patent Classification (IPC) or to both national classification and IPC

| B. | FIELDS SEARCHED |
| --- | --- |

Minimum documentation searched (classification system followed by classification symbols)

IPC:B60W

Documentation searched other than minimum documentation to the extent that such documents are included in the fields searched

Electronic data base consulted during the international search (name of data base and, where practicable, search terms used)

CNTXT, DWPI, WPABSC, ENTXTC, VCN: 北京经纬恒润科技, 刘鑫, 陈曦, 王庆辉, 王鹏, 坡度, 横向, 侧向, 纵向, 加速度, 轮速, 姿态, 俯仰, 滚转, 翻滚, 悬架, 高度, slope, gradient, grade, longitudinal, lateral, transversal, acceleration, velocity, position, suspension, height, pitching, rolling

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 116639132 A (BEIJING JINGWEI HIRAIN TECHNOLOGIES CO., LTD.) 25 August 2023 (2023-08-25) <br> claims 1-15, description, paragraphs 33-313, and figures 1-7 | 1-17 |
| Y | CN 112046487 A (SUZHOU AUTOMOTIVE RESEARCH INSTITUTE, TSINGHUA UNIVERSITY (WUJIANG) et al.) 08 December 2020 (2020-12-08) <br> description, paragraphs 8-99, and figures 1-2 | 1-17 |
| Y | CN 108297872 A (CHINA FAW CO., LTD.) 20 July 2018 (2018-07-20) <br> description, paragraphs 90-164, and figures 1-3 | 1-17 |
| A | CN 111731308 A (DONGFENG MOTOR CO., LTD.) 02 October 2020 (2020-10-02) <br> entire document | 1-17 |
| A | CN 112249025 A (HUMAN HORIZONS (SHANGHAI) CLOUD COMPUTING TECHNOLOGY CO., LTD.) 22 January 2021 (2021-01-22) <br> entire document | 1-17 |

☑ Further documents are listed in the continuation of Box C. ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **28 February 2024** | **05 March 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
|---|
| **PCT/CN2023/136058** |

### C.    DOCUMENTS CONSIDERED TO BE RELEVANT

| Category* | Citation of document, with indication, where appropriate, of the relevant passages | Relevant to claim No. |
|---|---|---|
| A | CN 113085869 A (ZHEJIANG GEELY AUTOMOBILE HOLDINGS LTD. et al.) 09 July 2021 (2021-07-09) <br> entire document | 1-17 |
| A | FR 2920047 A3 (RENAULT S.A.S.) 20 February 2009 (2009-02-20) <br> entire document | 1-17 |
| A | JP 2021075198 A (HITACHI ASTEMO LTD.) 20 May 2021 (2021-05-20) <br> entire document | 1-17 |

**INTERNATIONAL SEARCH REPORT**
Information on patent family members

International application No.

**PCT/CN2023/136058**

| Patent document cited in search report | | | Publication date (day/month/year) | Patent family member(s) | Publication date (day/month/year) |
|---|---|---|---|---|---|
| CN | 116639132 | A | 25 August 2023 | None | |
| CN | 112046487 | A | 08 December 2020 | None | |
| CN | 108297872 | A | 20 July 2018 | None | |
| CN | 111731308 | A | 02 October 2020 | None | |
| CN | 112249025 | A | 22 January 2021 | None | |
| CN | 113085869 | A | 09 July 2021 | None | |
| FR | 2920047 | A3 | 20 February 2009 | None | |
| JP | 2021075198 | A | 20 May 2021 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310723662